# FASCICULE DE BREVET EUROPEEN

(11) **EP 3 230 701 B1**
(45) Date de publication et mention de la délivrance du brevet: **14.06.2023**
(21) Numéro de dépôt: 15818013.3
(22) Date de dépôt: 11.12.2015
(51) Int. Cl.: G01J 3/02, G01J 3/36, G02B 17/00, G02B 27/10, G01J 3/12

(54) **DISPOSITIF DE FILTRAGE OPTIQUE POUR LA DÉTECTION DE GAZ**
OPTISCHE FILTERUNGSVORRICHTUNG ZUR DETEKTION VON GAS
OPTICAL FILTERING DEVICE FOR DETECTING GAS

(30) Priorité: 12.12.2014 FR 1462391
(43) Date de publication de la demande: 18.10.2017
(73) Titulaire: Bertin Technologies, 78180 Montigny-le-Bretonneux (FR)
(72) Inventeur: MORIN, Nathalie, 13530 Trets (FR); BERNASCOLLE, Philippe, 83170 Tourves (FR); FERVEL, Franck, 13790 Peynier (FR); DRUART, Guillaume, 91120 Palaiseau (FR)
(74) Mandataire: Decobert, Jean-Pascal
(86) Numéro de dépôt international: PCT/FR2015/053456
(87) Numéro de publication internationale: WO 2016/092236

(56) Documents cités:
- WO-A1-2014/124982
- US-A- 4 498 012
- US-A1- 2009 104 406

## Description

L'invention concerne un dispositif de filtrage optique en longueur d'ondes ainsi qu'un dispositif de détection optique de gaz à distance au moyen d'un dispositif précité de filtrage optique, applicable notamment à la surveillance de sites industriels tels que des usines de produits chimiques, des raffineries, des installations de stockage de gaz, etc. L'invention n'est bien évidemment pas limitée aux applications précitées et peut par exemple être utilisée dans le cadre d'opérations militaires dans des zones de conflits, lorsque des gaz nocifs sont susceptibles d'être utilisés.

On connaît, par les documents EP-A-0544962 et WO 03/044499, un imageur infrarouge associé à des filtres optiques de mesure et de référence qui sont placés successivement sur l'axe optique de l'imageur et qui ont des bandes passantes contenant une raie d'absorption d'un gaz recherché (pour les filtres de mesure) ou qui sont complémentaires de cette raie d'absorption (pour les filtres de référence). On utilise le fond de la zone observée comme source infrarouge et on met en évidence la présence d'un gaz recherché par un traitement différentiel des images infrarouges prises à travers les filtres, le traitement permettant de calculer la concentration du gaz détecté.

De façon pratique, un ensemble de filtres de mesure et de référence est porté par un disque rotatif motorisé pour amener successivement les filtres sur l'axe optique de l'imageur. Les images de la zone observée dans les différentes bandes spectrales correspondant aux bandes passantes des filtres sont acquises séquentiellement et sont séparées les unes des autres dans le temps par des intervalles correspondant aux changements de filtres. Ces intervalles dégradent la sensibilité totale de l'imageur, qui est "aveugle" pendant les changements de filtre. De plus, deux images successives de la zone observée dans une même bande spectrale sont séparées par un laps de temps relativement important, correspondant à la durée de la rotation du disque porte-filtres sur un tour complet, ce qui nuit à la cohérence temporelle des images traitées et pose des problèmes dans le cas de la détection de mouvements rapides dans la zone observée.

En outre, les moyens de motorisation du disque porte-filtres sont une source de bruits et de vibrations et dégradent la fiabilité globale de l'imageur. De plus, l'utilisation d'un organe mobile, à savoir la roue, implique que le niveau des vibrations subies par le dispositif doit être maitrisé pour éviter que celles-ci n'impactent le fonctionnement même de l'organe rotatif.

Il est également connu un dispositif de filtrage comprenant un tube logeant une pluralité de miroirs allongés suivant l'axe du tube et agencés côte à côte autour de cet axe. Le flux lumineux en provenance d'une zone d'espace observée se propage dans le tube et subit des réflexions sur les miroirs, ce qui conduit à la formation d'une pluralité d'imagettes dont le nombre et la forme est fonction du nombre et de l'agencement des miroirs selon le principe de fonctionnement bien connu d'un kaléidoscope. Une matrice de photodétecteurs est agencée en sortie du tube de manière à collecter les différentes images. Il a ainsi été proposé d'agencer un filtre plan comportant une pluralité de zones juxtaposées destinées à absorber chacune une bande de fréquences différente. Un tel dispositif est divulgué dans la demande de brevet WO2014124982 A1.

Si cette configuration permet de réaliser un filtrage temporel dans une pluralité de bandes de fréquences différentes, il s'avère que l'utilisation d'un filtre plan est délicate puisqu'elle nécessite l'ajout de moyens de focalisation en aval du filtre pour réaliser une focalisation des rayons lumineux filtrés sur une matrice de détecteurs..

La présente invention, définie dans la revendication 1, a notamment pour but d'éviter ces inconvénients d'une façon simple, efficace et économique.

A cet effet, elle propose un dispositif de filtrage optique, en particulier pour la détection de gaz à distance, comprenant un organe comportant un passage tubulaire logeant une pluralité de structures réfléchissantes aptes à réfléchir des longueurs d'ondes infrarouge, lesdites structures étant allongées suivant l'axe du passage tubulaire et disposées autour de cet axe, caractérisé en ce que lesdites structures réfléchissantes comprennent des moyens de filtrage par absorption de bandes de longueurs d'ondes différentes situées dans la bande spectrale infrarouge.

L'invention propose ainsi de réaliser le filtrage par des structures filtrantes portées par les structures réfléchissantes de sorte que l'utilisation d'un filtre plan comportant une pluralité de zones filtrantes est rendu inutile. De plus, un tel montage permet de réduire l'encombrement du dispositif de filtrage optique selon la direction de son axe optique puisque les moyens de filtrage sont intégrés aux structures réfléchissantes.

En comparaison des dispositifs comportant une roue mobile à filtres, les vibrations ainsi que la sensibilité aux vibrations du dispositif sont également éliminées. Le dispositif de filtrage selon l'invention peut ainsi être utilisé dans un environnement soumis à d'importantes vibrations, tels que par exemple un drone ou un hélicoptère du fait de l'absence de pièces mobiles.

Selon l'invention, les structures réfléchissantes sont aptes à réfléchir au moins les longueurs d'ondes infrarouges, c'est-à-dire des longueurs d'ondes comprises entre 0,78 µm et 5 mm. En effet, lorsque le dispositif de filtrage optique est utilisé dans un dispositif de détection de gaz, les longueurs d'ondes indicatives de la présence d'un gaz à détecter sont situées dans l'infrarouge. Plus particulièrement, les longueurs d'ondes des bandes d'absorption seront situées dans l'infrarouge moyen c'est-à-dire entre 3 et 50 µm, l'infrarouge proche étant compris entre 0,78 µm et 3 µm et l'infrarouge lointain correspondant aux longueurs d'ondes comprises entre 50 µm et 5 mm.

Selon une autre caractéristique de l'invention, au moins une des structures réfléchissantes comprend un support portant les moyens de filtrage. Les moyens de filtrage sont formés par une structure à plasmons de surface.

Si l'utilisation d'une structure à plasmons de surface est bien connu dans le cas de filtre réjecteur de bande fonctionnant en transmission, ce type de structure filtrante n'a jamais été utilisé en réflexion, qui plus est dans une configuration avec des angles d'incidences rasants, c'est-à-dire compris entre environ 60 et 80° (mesuré par rapport à la normale). De plus, l'intégration de structure à plasmon dans un dispositif de filtrage optique du type kaléidoscope n'a jamais été proposée. Enfin, les structures à plasmons de surface s'avèrent particulièrement efficace en terme de réjection/d'absorption d'une bande de fréquence donnée.

Dans un mode de réalisation de l'invention, au moins une des structures à plasmons comprend une couche d'un matériau métallique en contact avec le support et recouvert d'une couche d'un matériau diélectrique portant une pluralité de plots dimensionnés et espacés les uns par rapport aux autres de manière à permettre une absorption d'une bande de longueurs d'ondes donnée en réflexion.

Pour chaque structure à plasmons, les plots sont répartis selon une matrice bidimensionnelle avec un espacement inter-plots constant. Les plots peuvent avoir une forme cylindrique avec un axe de révolution sensiblement perpendiculaire aux couches métallique et diélectrique. Ainsi, les plots ont une section en forme de disque. D'autres formes sont également possibles telles que des plots à section carré par exemple.

Selon une autre caractéristique de l'invention, le dispositif comprend au moins trois structures réfléchissantes ayant des bandes d'absorbance différentes deux à deux.

L'invention concerne également un dispositif de détection optique de gaz à distance comprenant un dispositif de filtrage optique tel que décrit ci-dessus, un ensemble de photodétecteurs et des moyens optiques de focalisation sur cet ensemble de photodétecteurs d'images d'une zone d'espace destinée à être observée au travers du dispositif de filtrage.

Préférentiellement, le dispositif comprend un diaphragme intercalé entre un objectif d'entrée du dispositif et l'entrée du passage tubulaire ou entre la sortie du passage tubulaire et l'ensemble des éléments de détection.

En fonction du diamètre de l'ouverture du diaphragme, des zones intermédiaires noires sont ainsi formées entre les images sur la matrice de photodétecteurs, ce qui facilite les opérations de traitement d'images en supprimant les éventuels couplages entre des éléments de détection voisins.

D'autres avantages et caractéristiques de l'invention apparaîtront à la lecture de la description suivante faite à titre d'exemple non limitatif et en référence aux dessins annexés dans lesquels :
- la figure 1 est une représentation schématique du dispositif de filtrage optique selon l'invention ;
- la figure 2 est une représentation schématique en perspective d'un passage tubulaire selon un premier mode de réalisation du dispositif de filtrage selon l'invention ;
- la figure 3 est une vue schématique en perspective d'un plot porté par un matériau bicouche servant au filtrage par plasmons de surface ;
- la figure 4 est une vue schématique de dessus des plots ;
- la figure 5 est une vue schématique des imagettes obtenues sur la matrice de photodétecteurs avec un passage tubulaire selon la figure 2 ;
- la figure 6 est une vue similaire à la figure 3, un diaphragme étant agencé en entrée du passage tubulaire ;
- les figures 7 et 8 sont des vues de deux autres formes possibles pour un passage tubulaire logeant des miroirs ;
- la figure 9 représente un graphe comprenant quatre courbes représentant chacune l'évolution du coefficient de réflexion en fonction de la longueur d'onde pour une structure réfléchissante donnée.

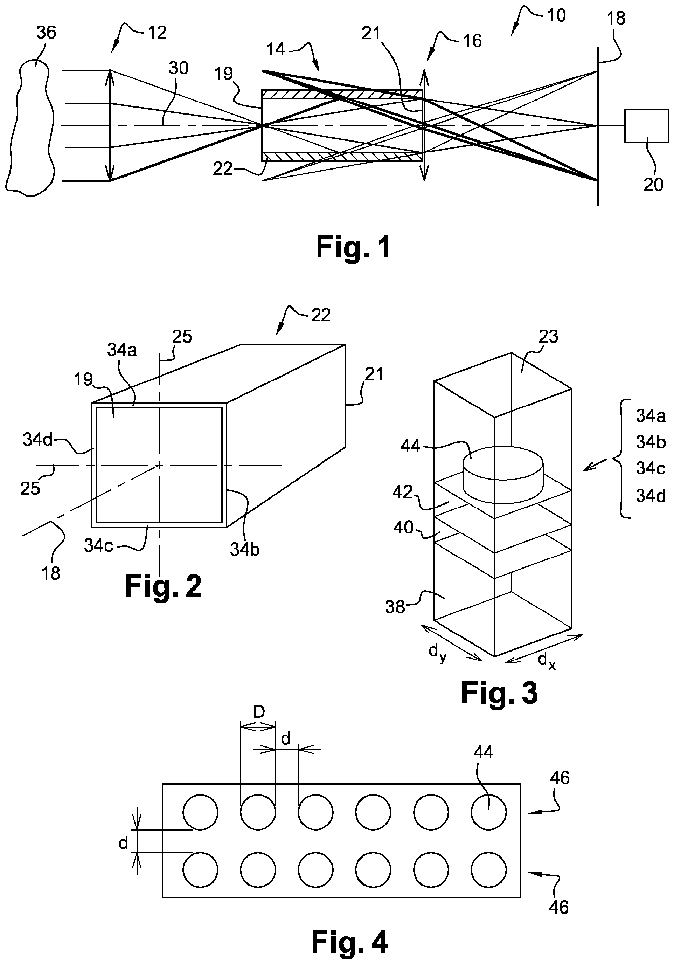

On se réfère tout d'abord à la figure 1 qui représente schématiquement un dispositif 10 de détection optique de gaz à distance selon l'invention comprenant des premiers moyens optiques d'entrée 12, tels par exemple qu'un objectif formé d'une ou de plusieurs lentilles, destinés à recevoir un flux électromagnétique en provenance d'une zone d'espace observée et l'orienter en entrée d'un dispositif de filtrage 14 selon l'invention, des seconds moyens optiques 16 de sortie destinés à focaliser le flux électromagnétique sortant du dispositif de filtrage sur un ensemble d'éléments de détection 18, tels que des photodétecteurs, reliés à des moyens de calcul et de traitement 20.

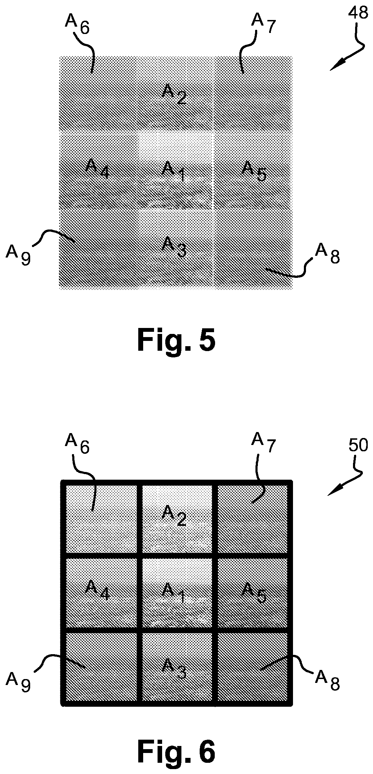

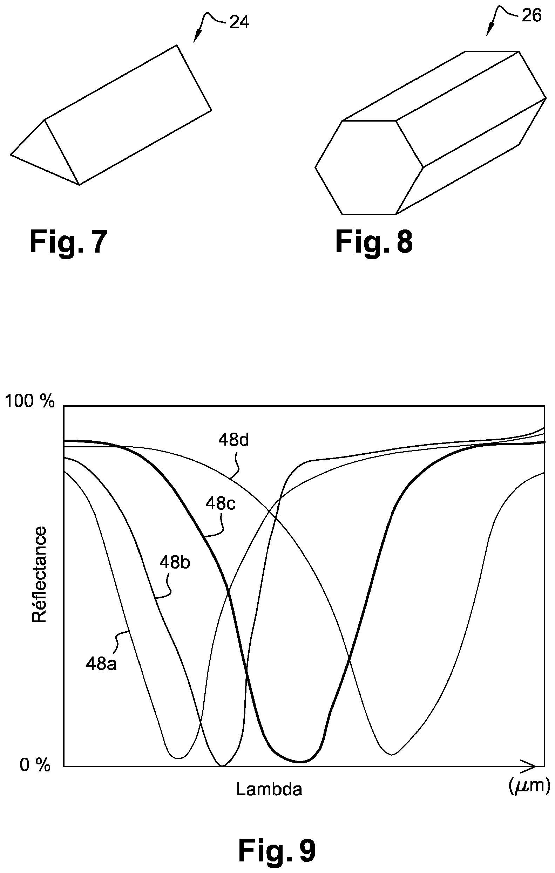

Le dispositif de filtrage optique 14 comprend un tube 22 qui peut être, comme représenté en figure 2, à section carrée délimitant un passage tubulaire. L'invention n'est bien entendu pas limitée à cette réalisation et concerne par exemple des tubes à section rectangulaire, triangulaire 24 (figure 6) ou à section hexagonale 26 (figure 7).

Le terme tube est utilisé ci-après pour désigner toute pièce comprenant un passage tubulaire pouvant loger une pluralité de structures réfléchissantes comme cela sera décrit ci-après.

Le tube 22 s'étend ainsi selon un axe 28 qui est confondu avec l'axe optique 30 du dispositif de détection de gaz et comprend intérieurement une pluralité de structures planes réfléchissantes 34a, 34b, 34c, 34d. Les structures réfléchissantes sont allongées selon la direction de l'axe optique 28. Chaque face interne du tube 22 porte une structure réfléchissante 34a, 34b, 34c, 34d s'étendant depuis une première extrémité destinée à former une entrée d'un flux radiatif en provenance d'une zone d'espace 36 observée jusqu'à une seconde extrémité opposée destinée à former une sortie dudit flux en direction de la matrice d'éléments de détection 18.

Selon l'invention, chaque structure réfléchissante 34a, 34b, 34c, 34d comprend un substrat 38 destiné à assurer une fonction de support mécanique. Les structures réfléchissantes 34a, 34b, 34c, 34d sont planes et s'étendent selon l'axe 18 du passage tubulaire qui comprend une entrée 19 et une sortie 21. Chaque structure réfléchissante 34a, 34b, 34c, 34d comprend une face 23 destinée à être orientée vers l'intérieur du passage tubulaire 22. Les structures réfléchissantes 34a, 34b, 34c, 34d sont réparties autour de l'axe 18 du passage tubulaire 22 de manière à être agencées circonférentiellement, c'est-à-dire autour de l'axe 18 du passage tubulaire, les unes à la suite des autres. Les structures réfléchissantes sont ainsi orientées de manière à ce que la normale 25 à chaque face 23 d'une structure réfléchissante 34a, 34b, 34c, 34d soit perpendiculaire à l'axe 18 du passage tubulaire 22.

Chaque substrat ou support 38 porte une structure bi-couche formée d'une couche d'un matériau métallique 40 en contact par une première face avec le support 38 et dont la une seconde face opposée à la première face est recouverte d'une couche 42 d'un matériau diélectrique portant, à l'opposé de la seconde face de la couche métallique 40, une pluralité de plots 44 (figures 3 et 4). Chaque structure réfléchissante 34a, 34b, 34c, 34d est ainsi formée par la couche métallique 40, la couche 42 de matériau diélectrique et l'agencement de plots.

Ainsi, l'invention utilise une pluralité de structures réfléchissantes chacune à structure plasmonique 34a, 34b, 34c, 34d intégrant, par exemple, des plots 44 dont les dimensions et la répartition détermine la bande de longueurs d'ondes absorbées. En particulier, les plots 44 sont agencés de manière régulière à la surface de la couche diélectrique 42. Chaque structure réfléchissante 34a, 34b, 34c, 34d comprend ainsi plusieurs rangées 46 de plots 44 qui peuvent être alignées selon la direction de l'axe optique 30.

Comme représenté aux figures 3 et 4, les plots 44 sont des cylindres ayant un axe de révolution sensiblement perpendiculaire aux couches de matériaux métallique 40 et diélectrique 42.

Pour faire varier la bande d'absorption de chaque structure plasmonique, il suffit de faire varier l'espacement d entre deux plots 44 et le diamètre D de chaque plot 44 (figure 4).

La figure 5 représente une image 48 d'une zone d'espace 36 enregistrée par la matrice de détecteurs 18 après passage au travers du tube 22 à section carrée comme représenté en figure 2. La figure 6 représente également une image 50 une série d'images similaires, lesquelles sont toutefois séparées les unes des autres par des bandes noires qui sont obtenues par l'ajout d'un diaphragme (non représenté) entre les premiers moyens optiques 12 et l'entrée du tube 22.

Comme cela est visible sur les figures 5 et 6, chaque image comprend neuf imagettes A1-A9 dont l'image centrale A1 correspond à une image de la zone d'espace 36 non filtrée, l'imagette A2 en position supérieure est obtenue après une réflexion du flux radiatif de la zone observée 36 sur le miroir plasmonique inférieur 34c, l'imagette A3 en position inférieure est obtenue après une réflexion du flux radiatif de la zone observée 36 sur le miroir plasmonique supérieur 34a, l'imagette A4 à gauche est obtenue après une réflexion du flux radiatif de la zone observée 36 sur le miroir plasmonique de droite 34b lorsque l'on regarde le tube 22 depuis son entrée, l'imagette A5 à droite est obtenue après une réflexion du flux radiatif de la zone observée 36 sur le miroir plasmonique de gauche 34d lorsque l'on regarde le tube 22 depuis son entrée. Les imagettes A6-A9 situées dans les angles, correspondent à des réflexions du flux radiatif sur deux miroirs adjacents et donc à deux absorptions dans deux bandes de longueurs d'ondes infrarouges différentes.

Le dispositif de détection de gaz selon l'invention comprend ainsi une pluralité de structures réfléchissantes 34a, 34b, 34c, 34d, aptes à réfléchir des longueurs d'ondes infrarouges et à absorber une bande de longueurs d'onde infrarouge donnée qui inclut la raie d'absorption d'un gaz à détecter. Ainsi, avec un dispositif selon l'invention il est possible de détecter de manière simultanée plusieurs types de gaz. De plus, l'obtention simultanée de l'image de la zone d'espace observée non filtrée correspondant à l'imagette centrale A1 sur la matrice de détecteurs et des imagettes filtrées inférieure A3, supérieure A1, droite A5 et gauche A4, permet par soustraction de déduire la présence ou non de gaz à détecter ayant une bande d'absorption de l'infrarouge située dans l'une des bandes absorbantes des miroirs plasmoniques.

La figure 9 représente un graphe dont l'abscisse représente la longueur d'onde en micromètres, dans la bande de rayonnement infrarouge, et l'ordonnée représente la réflectance. Chaque courbe 48a, 48b, 48c, 48d représente l'évolution de la réflectance pour un des miroirs tels que représentés en figure 2.

Dans une réalisation pratique, le support est ainsi réalisé en silicium, la couche métallique est en chrome, la couche diélectrique est réalisée en silicium et les plots peuvent être réalisés en chrome.

Le dispositif selon l'invention permet une grande ouverture angulaire de détection de gaz en temps réel. Pour améliorer l'analyse du gaz à détecter ainsi que sa concentration, il serait possible de combiner le dispositif selon l'invention 10 avec un spectroscope à transformée de Fourier qui a une faible ouverture angulaire mais qui permet de détecter précisément les composés et leurs concentrations respectives dans une direction donnée de la zone d'espace analysée. A cette fin, il serait envisageable d'utiliser une matrice de micromiroirs pour orienter dans un premier temps le flux radiatif en provenance de la zone d'espace observée vers le dispositif de détection de gaz à filtres plasmoniques et en cas de détection positive d'un gaz d'orienter certains des micromiroirs dans une seconde position pour permettre l'orientation d'une partie du flux vers le spectroscope à transformée de Fourier.

Notons que le passage tubulaire décrit précédemment a une section constante sur toute sa longueur. Toutefois, on pourrait imaginer avoir un tube à section se réduisant (ou augmentant) vers l'aval, c'est dire dans le sens de propagation de la lumière dans le dispositif, en direction des éléments de détection. L'effet obtenu est ainsi similaire à ce qui a été décrit en référence à l'image de la figure 6 lorsqu'un diaphragme est ajouté.

## Revendications

1. Dispositif de filtrage optique (10), en particulier pour la détection de gaz à distance, comprenant un organe (22, 24, 26) comportant un passage tubulaire logeant une pluralité de structures réfléchissantes (34a, 34b, 34c, 34d), chacune portée par une face interne du passage tubulaire, lesdites structures (34a, 34b, 34c, 34d) étant aptes à réfléchir des longueurs d'ondes infrarouge, lesdites structures (34a, 34b, 34c, 34d) étant planes et allongées suivant l'axe du passage tubulaire et disposées autour de cet axe en s'étendant chacune depuis une première extrémité du passage tubulaire destinée à former une entrée (19) d'un flux radiatif en provenance d'une zone d'espace observée jusqu'à une seconde extrémité du passage tubulaire opposée à la première extrémité et destinée à former une sortie (21) de flux radiatif, dans lequel lesdites structures (34a, 34b, 34c, 34d) comprennent chacune une face (23) orientée vers l'intérieur du passage tubulaire, la normale (25) à chaque face (23) étant perpendiculaire à l'axe (18) du passage tubulaire, lesdites structures (34a, 34b, 34c, 34d) étant agencées circonférentiellement les unes à la suite des autres, **caractérisé en ce que** lesdites structures réfléchissantes (34a, 34b, 34c, 34d) comprennent des moyens de filtrage par absorption de bandes de longueurs d'ondes différentes situées dans la bande spectrale infrarouge, et **en ce que** chacune des structures réfléchissantes (34a, 34b, 34c, 34d) comprend un support (38) portant les moyens de filtrage formés par une structure à plasmons de surface.

2. Dispositif selon la revendication 1, dans lequel chacune des structures à plasmons comprend une couche (40) d'un matériau métallique en contact avec le support (38) et recouvert d'une couche (42) d'un matériau diélectrique portant une pluralité de plots dimensionnés et espacés les uns par rapport aux autres de manière à permettre une absorption d'une bande de longueurs d'ondes donnée en réflexion.

3. Dispositif selon la revendication 2, dans lequel pour chaque structure à plasmons, les plots (44) sont répartis selon une matrice bidimensionnelle avec un espacement inter-plots constant.

4. Dispositif selon la revendication 2 ou 3, dans lequel les plots (44) ont une forme cylindrique d'axe de révolution sensiblement perpendiculaire aux couches métallique (40) et diélectrique (42).

5. Dispositif selon l'une des revendications précédentes comprenant au moins trois structures réfléchissantes ayant des bandes d'absorbance différentes deux à deux.

6. Dispositif de détection optique de gaz à distance comprenant un dispositif de filtrage optique (10) selon l'une des revendications précédentes, un ensemble d'éléments de détection (18) et des moyens optiques (16) de focalisation sur cet ensemble d'éléments de détection (18) d'images d'une zone d'espace destinée à être observée au travers du dispositif de filtrage.

7. Dispositif selon la revendication 6, **caractérisé en ce qu'**il comprend un diaphragme intercalé entre un objectif d'entrée (12) du dispositif et l'entrée du passage tubulaire (22) ou entre la sortie du passage tubulaire (22) et l'ensemble des éléments de détection (18).

## Patentansprüche

1. Optische Filtervorrichtung (10), insbesondere zur Ferndetektion von Gas, umfassend ein Organ (22, 24, 26), das einen rohrförmigen Durchlass umfasst, in dem eine Vielzahl von reflektierenden Strukturen (34a, 34b, 34c, 34d) untergebracht sind, die jeweils von einer Innenfläche des rohrförmigen Durchlasses getragen werden, wobei die Strukturen (34a, 34b, 34c, 34d) in der Lage sind, Infrarot-Wellenlängen zu reflektieren, wobei die Strukturen (34a, 34b, 34c, 34d) flach und entlang der Achse des rohrförmigen Durchlasses länglich und um diese Achse herum angeordnet sind, wobei sie sich jeweils von einem ersten Ende des rohrförmigen Durchlasses, das dazu bestimmt ist, einen Eingang (19) für einen Strahlungsfluss aus Richtung einer beobachteten Raumzone zu bilden, bis zu einem zweiten Ende des rohrförmigen Durchlasses erstrecken, das dem ersten Ende gegenüberliegt und dazu bestimmt ist, einen Ausgang (21) für den Strahlungsfluss zu bilden, wobei die Strukturen (34a, 34b, 34c, 34d) jeweils eine Fläche (23) umfassen, die zur Innenseite des rohrförmigen Durchlasses hin ausgerichtet ist, wobei die Normale (25) zu jeder Fläche (23) senkrecht zur Achse (18) des rohrförmigen Durchlasses steht, wobei die Strukturen (34a, 34b, 34c, 34d) in Umfangsrichtung aufeinanderfolgend eingerichtet sind, **dadurch gekennzeichnet, dass** die reflektierenden Strukturen (34a, 34b, 34c, 34d) Mittel zur Filterung durch Absorption von Bändern unterschiedlicher Wellenlängen, die im Infrarot-Spektralband liegen, umfassen, und dadurch, dass jede der reflektierenden Strukturen (34a, 34b, 34c, 34d) einen Träger (38) umfasst, der die Filtermittel trägt, die von einer Oberflächenplasmonenstruktur gebildet werden.

2. Vorrichtung nach Anspruch 1, wobei jede der Plasmonenstrukturen eine Schicht (40) aus einem metallischen Material umfasst, die mit dem Träger (38) in Kontakt steht und von einer Schicht (42) aus einem dielektrischen Material bedeckt ist, die eine Vielzahl von Stiften trägt, die so bemessen und voneinander beabstandet sind, dass eine Absorption eines gegebenen Wellenlängenbandes in Reflexion ermöglicht wird.

3. Vorrichtung nach Anspruch 2, wobei bei jeder Plasmonenstruktur die Stifte (44) in einer zweidimensionalen Matrix mit einer konstanten Beabstandung zwischen den Stiften verteilt sind.

4. Vorrichtung nach Anspruch 2 oder 3, wobei die Stifte (44) eine zylindrische Form mit einer Drehachse aufweisen, die im Wesentlichen senkrecht zu der metallischen (40) und der dielektrischen (42) Schicht steht.

5. Vorrichtung nach einem der vorstehenden Ansprüche, die mindestens drei reflektierende Strukturen umfasst, die paarweise unterschiedliche Absorptionsbänder aufweisen.

6. Vorrichtung zur optischen Ferndetektion von Gas, die eine optische Filtervorrichtung (10) nach einem der vorstehenden Ansprüche, einen Satz von Detektionselementen (18) und optische Mittel (16) zum Fokussieren von Bildern einer Raumzone, die durch die Filtervorrichtung beobachtet werden soll, auf diesen Satz von Detektionselementen (18) umfasst.

7. Vorrichtung nach Anspruch 6, **dadurch gekennzeichnet, dass** sie eine Membran umfasst, die zwischen einem Eingangsobjektiv (12) der Vorrichtung und dem Eingang des rohrförmigen Durchlasses (22), oder zwischen dem Ausgang des rohrförmigen Durchlasses (22) und dem Satz von Detektionselementen (18) eingefügt ist.

## Claims

1. An optical filtering device (10), in particular for remote gas detection, comprising a member (22, 24, 26) including a tubular passage accommodating a plurality of reflective structures (34a, 34b, 34c, 34d),each carried by an inner face of the tubular passage, said structures (34a, 34b, 34c, 34d) being able to reflect infrared wavelengths, said structures (34a, 34b, 34c, 34d) being planar and elongated according to the axis of the tubular passage and disposed around this axis while each extending from a first end of the tubular passage intended to form an inlet (19) of a radiative flux originating from an observed area of space up to a second end of the tubular passage opposite to the first end and intended to form a radiative flux outlet (21), wherein each of said structures (34a, 34b, 34c, 34d) comprises a face (23) directed towards the inside of the tubular passage, the normal (25) to each face (23) being perpendicular to the axis (18) of the tubular passage, said structures (34a, 34b, 34c, 34d) being arranged circumferentially one after another, **characterised in that** said reflective structures (34a, 34b, 34c, 34d) comprise means for filtering by absorption of different wavelength bands located in the infrared spectral band, and **in that** each of the reflective structures (34a, 34b, 34c, 34d) comprises a support (38) carrying the filtering means formed by a surface plasmon structure.

2. The device according to claim 1, wherein each of the plasmon structures comprises a layer (40) of a metallic material in contact with the support (38) and covered by a layer (42) of a dielectric material carrying a plurality of pads dimensioned and spaced apart from one another so as to enable absorption of a given wavelength band in reflection.

3. The device according to claim 2, wherein for each plasmon structure, the pads (44) are distributed over a two-dimensional array with constant spacing between the pads.

4. The device according to claim 2 or 3, wherein the pads (44) have a cylindrical shape with an axis of revolution substantially perpendicular to the metallic (40) and dielectric (42) layers.

5. The device according to one of the preceding claims, comprising at least three reflective structures having absorbance bands that differ two-by-two.

6. A device for remote optical gas detection comprising an optical filtering device (10) according to one of the preceding claims, a set of sensing elements (18) and optical means (16) for focusing on this set of sensing elements (18) images from an area of space intended to be observed throughout the filtering device.

7. The device according to claim 6, **characterised in that** it comprises a diaphragm interposed between an inlet lens (12) of the device and the inlet of the tubular passage (22) or between the outlet of the tubular passage (22) and the set of sensing elements (18).
